# EUROPEAN PATENT APPLICATION

(11) **EP 4 748 988 A1**
(43) Date of publication of application: **27.05.2026**
(21) Application number: 25214292.2
(22) Date of filing: 07.11.2025
(51) Int. Cl.: D04B 1/16, B32B 5/26, D04B 1/18

(54) **NO SWEAT MARKS FABRIC WITH BALANCED MOISTURE MANAGEMENT FUNCTION**

(30) Priority: 20.11.2024 US 202418953288
(71) Applicant: Lululemon Athletica Canada Inc., Vancouver BC V6J 1C7 (CA)
(72) Inventor: DANDAPURE, Yogendra V, Vancouver, V6J 1C7 (CA); LOGAN, Peter Crombie, Vancouver, V6J 1C7 (CA); MANNA, Rovin, Vancouver, V6J 1C7 (CA)
(74) Representative: Boult Wade Tennant LLP

(57) **Abstract**

A knit fabric includes a back layer including a first back yarn, the first back yarn having a minimum moisture regain of at least 6.0 weight percent. The first back yarn is plated with a back elastic yarn. The knit fabric also includes a face layer including a first face yarn having a maximum moisture regain of less than 5.5 weight percent. The first face yarn is plated with a face elastic yarn. The knit fabric further includes a connecting elastic yarn forming yarn connections between the face layer and the back layer binding together the layers. A denier of the face elastic yarn may be greater than a denier of the back elastic yarn and the connecting elastic yarn. One or both of the back layer or the face layer may comprise a full-feeder knit construction.

## Description

### CROSS-REFERENCE TO RELATED APPLICATIONS

This application is a continuation-in-part of and claims priority to U.S. Patent Application Serial No. 18/164,113, filed on February 3, 2023 and entitled "No Sweat Marks Fabric with Moisture Management Function", which application is a continuation of and claims priority to PCT/CA2022/050529, filed on April 7, 2022 and entitled "No Sweat Marks Fabric with Moisture Management Function", which application claims the benefit of priority to U.S. Provisional Patent Application No. 63/173,093, filed April 9, 2021, the content of which applications are hereby incorporated by reference in their entirety.

### BACKGROUND

The present embodiments relate generally to fabrics and textiles and, more specifically, to a fabric or textile with a balanced moisture management function that reduces occurrence of moisture (liquid) spots, such as sweat spots, water spots or blood spots, on its face surface and which also reduces bagging or puckering on the face surface.

Fabrics or textiles used in apparel designed for athletic activities are conceived with the objective of maximizing the body performance by notably controlling the body temperature and keeping the moisture away from the individual. The challenge is to manufacture such apparel which generally exhibit characteristics that enhance the performance without compromising the appearance and/or comfort of an individual. The moisture from the associated sweat generated as a result of physical exertion causes undesirable liquid spots on the face surface of the apparel. Having a fabric that reduces occurrence of moisture spots is convenient for wearers that can work out in athletic gear and walk to get groceries or coffee without worrying about sweat marks. During hot humid days, people commuting also desire to be provided with apparel made from fabrics that do not show sweat marks on their clothing.

It is thus highly desired to be provided with improved fabrics that reduce occurrence of moisture spots on their face surface.

### SUMMARY

In one aspect, the disclosure provides a knit fabric, such as a knit fabric with balanced moisture management function. The knit fabric has a back layer including a first back yarn having a minimum moisture regain of at least 6.0 weight percent based on a weight of the first back yarn and a back elastic yarn. The first back yarn and the back elastic yarn are plated together in a back layer knit construction. The knit fabric also has a face layer opposing the back layer. The face layer includes a first face yarn having a maximum moisture regain of less than 5.5 weight percent based on a weight of the first face yarn and a face elastic yarn. The first face yarn and the face elastic yarn are plated together in a face layer knit construction. The knit fabric includes a connecting elastic yarn forming a plurality of yarn connections between the face layer and the back layer. In one aspect, a denier of the face elastic yarn is greater than a denier of the back elastic yarn and is greater than a denier of the connecting elastic yarn. In another aspect, a back layer knit construction comprises a full-feeder knit construction with the first back yarn and the back elastic yarn, or a face layer knit construction comprises a full-feeder knit construction with the first face yarn and the face elastic yarn, or both the back layer knit construction and the face layer knit construction comprise full-feeder knit constructions. In yet another aspect, a denier of the face elastic yarn is greater than a denier of the back elastic yarn and is greater than a denier of the connecting elastic yarn; and a back layer knit construction comprises a full-feeder knit construction with the first back yarn and the back elastic yarn, or a face layer knit construction comprises a full-feeder knit construction with the first face yarn and the face elastic yarn, or both the back layer knit construction and the face layer knit construction comprise full-feeder knit constructions.

In another aspect, the disclosure provides an article of apparel including the knit fabric described herein.

In another aspect, the disclosure provides a method of knitting a fabric. The method includes knitting a back layer having a first back yarn with a minimum moisture regain of at least 6.0 weight percent based on a weight of the first back yarn and a back elastic yarn. Knitting the back layer includes plating the first back yarn and the back elastic yarn in a back layer knit construction. The method also includes knitting a face layer opposing the back layer. The face layer has a first face yarn with a maximum moisture regain of less than 5.5 weight percent based on a weight of the first face yarn and a face elastic yarn. Knitting the face layer includes plating the first face yarn and the face elastic yarn in a face layer knit construction. The method further includes knitting a plurality of yarn connections between the face layer and the back layer using a connecting elastic yarn, thereby connecting the face layer and the back layer to each other and forming a knit fabric. A denier of the face elastic yarn is greater than a denier of the back elastic yarn and is greater than a denier of the connecting elastic yarn.

Other systems, methods, features and advantages of the disclosure will be, or will become, apparent to one of ordinary skill in the art upon examination of the following figures and detailed description. It is intended that all such additional systems, methods, features and advantages be included within this description and this summary, be within the scope of the disclosure, and be protected by the following claims.

### BRIEF DESCRIPTION OF THE DRAWINGS

The disclosure can be better understood with reference to the following drawings and description. Throughout the drawings, reference numbers may be re-used to indicate correspondence between referenced elements. The drawings are provided to illustrate example embodiments described herein and are not intended to limit the scope of the disclosure. Sizes and relative positions of elements in the drawings are not necessarily drawn to scale. For example, the shapes and sizes of various elements and angles are not drawn to scale, and some of these elements are arbitrarily enlarged and positioned to improve drawing legibility.
FIG. 1 is a representative view of an example embodiment of a knit fabric demonstrating bagging or puckering due to the absorption of moisture;
FIG. 2 is a representative 3D isometric cross-sectional view of a knit fabric including a face layer and a back layer joined by a connecting yarn;
FIG. 3 is a representational side cross-sectional view of the example embodiment of a knit fabric shown in FIG. 1 absorbing moisture on a back layer and showing bagging or puckering on a face layer;
FIG. 4 is a representational view of an example embodiment of a knitting diagram for a knit fabric;
FIG. 5 is a schematic view of an example embodiment of a knitting process for forming a piqué knit fabric showing the four courses or repeat that forms the piqué knit fabric;
FIG. 6 is a representational view of an example embodiment of a knit fabric that resists bagging or puckering due to the absorption of moisture; and
FIG. 7 is a representational cross-sectional view of the example embodiment of a knit fabric shown in FIG. 6 absorbing moisture on a back layer and showing an even surface on a face layer free from bagging or puckering due to the absorption of moisture.

### DETAILED DESCRIPTION

The techniques of the present embodiments provide a knit fabric. The knit fabric according to the present embodiments includes a back layer with a first back yarn having a minimum moisture regain of at least 6.0 weight percent based on a weight of the first back yarn. The back layer includes a back elastic yarn that is plated with the first back yarn in a back layer knit construction. The knit fabric also has a face layer opposing the back layer. The face layer includes a first face yarn having a maximum moisture regain of less than 5.5 weight percent based on a weight of the first face yarn, and a face elastic yarn that that is plated with the first face yarn in a face layer knit construction. A connecting elastic yarn forms a plurality of yarn connections between the face layer and the back layer. In one aspect, a denier of the face elastic yarn is greater than a denier of the back elastic yarn and is greater than a denier of the connecting elastic yarn. In another aspect, a back layer knit construction comprises a full-feeder knit construction with the first back yarn and the back elastic yarn, or a face layer knit construction comprises a full-feeder knit construction with the first face yarn and the face elastic yarn, or both the back layer knit construction and the face layer knit construction comprise full-feeder knit constructions. In yet another aspect, a denier of the face elastic yarn is greater than a denier of the back elastic yarn and is greater than a denier of the connecting elastic yarn; and a back layer knit construction comprises a full-feeder knit construction with the first back yarn and the back elastic yarn, or a face layer knit construction comprises a full-feeder knit construction with the first face yarn and the face elastic yarn, or both the back layer knit construction and the face layer knit construction comprise full-feeder knit constructions.

With any of these arrangements, the fabric dries faster making the outer surface of the face layer dry and avoiding or reducing the occurrence of moist spots on the face layer outer surface. These arrangements also avoid bagging or puckering of the outer surface of the face layer when moist spots are present in the knit fabric. It has been found that this knit fabric is effective to reduce or eliminate occurrence of moisture spots on the outer surface of the face layer of the knit fabric, such as moisture spots caused by sweat of a wearer wearing a garment made using the knit fabric. Similar knit fabrics have been observed to bag or pucker at an outer perimeter of a moisture spot at the interface between the moisture spot and a dry region of the knit fabric, even when the moisture spot is only present in the back layer of the fabric. When such bagging or puckering occurs, it can be perceived to be a flawed or damaged region of the knit textile, even though the bagging or puckering may disappear once the moisture spot has dried. It has also been found that the knit fabric described herein is effective to reduce or prevent the appearance of such bagging or puckering on the outer surface of the face layer of the knit fabric when a moisture spot is present. By reducing or eliminating bagging or puckering on the outer side of the face of the knit fabric a more desirable and appealing appearance is provided for the knit fabric and for an article, such as an article of apparel, which includes the knit fabric.

Example fabrics are described in Applicant's U.S. Patent Application Serial No. 18/164,113, filed on February 3, 2023 and entitled "No Sweat Marks Fabric with Moisture Management Function", which published as U.S. Patent Application Publication No. 2023/0172294, the disclosure of which application is expressly incorporated by reference herein in its entirety.

In the following description, details are set forth to provide an understanding of the application. In some instances, certain structures, techniques, and methods have not been described or shown in detail in order not to obscure the application. In the context of the present disclosure, various terms are used in accordance with what is understood to be the ordinary meaning of those terms.

For consistency and convenience, directional adjectives are employed throughout this detailed description corresponding to the illustrated embodiments. It will be understood that each of these directional adjectives may be applied to garments or articles of clothing, as well as individual components of the article of clothing or garment. Directional terms such as "top", "bottom", "front", "back", "upper", "lower", "outer" and "inner" are used in the following description for the purpose of providing relative reference only and are not intended to suggest any limitations on how any article or garment is to be positioned during use, or to be mounted in an assembly or relative to an environment. The use of the word "a" or "an" when used herein in conjunction with the term "comprising" may mean "one", but it is also consistent with the meaning of "one or more", "at least one" and "one or more than one". Any element expressed in the singular form also encompasses its plural form. Any element expressed in the plural form also encompasses its singular form. The term "plurality" as used herein means more than one, for example, two or more, three or more, four or more, and the like.

In some embodiments, absorption of moisture by the back layer may cause bagging or puckering on the face layer outer surface of the knit fabric. Bagging is a distortion or deformation to the fabric surface and puckering is a bumpy, uneven fabric surface. Both bagging and puckering cause unevenness in the fabric surface of articles of apparel that can be unappealing and less desirable to a wearer of the articles.

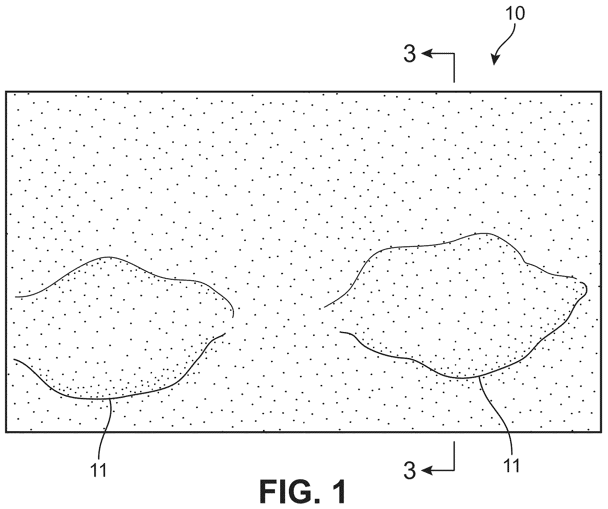

Referring now to FIG. 1, a representative view of an example embodiment of a fabric 10 demonstrating bagging or puckering due to the absorption of moisture by a back layer is shown. In this embodiment, fabric 10 is a knit fabric having a face layer and an opposite back layer joined by a connecting yarn as described herein. In an example embodiment, the moisture regain of the first face yarn is lower than the moisture regain of the first back yarn. When the first back yarn becomes moist, it can shrink, particularly when the first back yarn includes cellulosic fibers, including regenerated cellulose fibers. In contrast, due to the lower moisture regain of the first face yarn, it either does not shrink or shrinks to a lesser degree than the first back yarn when wet or moist. The uneven levels of shrinkage between the yarns of the face and back layers cause distortions or unevenness in the outer surface of fabric 10, such as bagging or puckering 11 visible in the areas shown in FIG. 1. These distortions or unevenness in the outer surface of the face layer of fabric 10, which appear as bagging or puckering 11, may also be caused or exacerbated by the first back yarn becoming heavy or weighted down by the absorbed moisture.

As shown in FIG. 1, fabric 10 demonstrates bagging or puckering 11 in two areas caused by the interface between moisture absorbed by a back layer of fabric and a dry region of fabric 10. As described above, the dissimilarity in the level of shrinkage of the first back yarn and the first face yarn, due to their different levels of moisture regain, can cause the unsightly and unappealing distortions or unevenness to the surface of fabric 10 that are shown as bagging or puckering 11.

In an example embodiment, knit fabric 10 may have a double layer knit construction. For example, in some embodiments knit fabric 10 may be formed as a double jersey or double pique or double rib knit construction. In other embodiments, knit fabric 10 may be formed as a single jersey, single pique, ribbed knit (including a 1x1 ribbed knit construction or a 2x2 ribbed knit construction or the like), or tricot knit construction. In some embodiments, the face layer may comprise a different knit construction than the back layer. For example, the face layer may comprise a pique or tricot or ribbed knit construction, while the back layer may comprise a jersey knit construction. In various embodiments, the knit construction may comprise a full-feeder knit construction or a half-feeder (also known as alternate feeder) knit construction. For example, the face layer may comprise a full-feeder jersey, pique, tricot or ribbed knit construction, and the back layer may comprise a full-feeder jersey, pique, tricot or ribbed knit construction. The face layer may comprise a full-feeder jersey, pique, tricot or ribbed knit construction, and the back layer may comprise a half-feeder jersey knit construction. The face layer may comprise a full-feeder pique or ribbed knit construction, and the back layer may comprise a full-feeder jersey knit construction. In various embodiments, knit fabrics according to the techniques described herein may be formed using weft knitting or warp knitting processes, including using circular knitting machines and/or flat bed knitting machines.

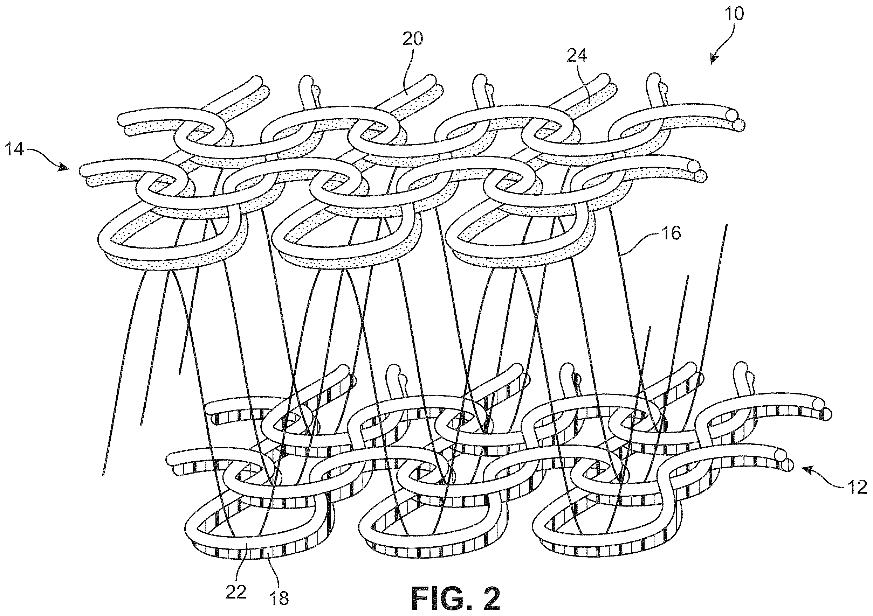

Referring now to FIG. 2, knit fabric 10 is formed with a double layer knit construction joined by a connecting yarn. In this embodiment, fabric 10 includes a back (inner) layer 12 which is the layer next to the skin of a wearer and a face (outer) layer 14 which corresponds to the layer of fabric 10 facing the exterior and away from the skin of the wearer. In the embodiment shown, a connecting yarn 16 binds together back layer 12 and face layer 14 in a zig-zag pattern or construction, thereby connecting knit fabric 10 together. In this embodiment, back layer 12 is formed by a first back yarn 18 that is plated with a back elastic yarn 22. First back yarn 18 can absorb moisture from the skin of a wearer and may spread it across on an inside surface of back layer 12 between back layer 12 and face layer 14. In some cases, the moisture regain of first back yarn 18 is in a range of 6% - 18%. With this arrangement, knit fabric 10 may dry faster while keeping the outer surface of face layer 14 without sweat marks visible on the outer surface of knit fabric 10.

The first back yarn 18 has a moisture regain of at least 6.0 weight percent. In some embodiments, the first back yarn 18 exhibits shrinkage at least in length when moist or wet, such as a first back yarn 18 having a wet shrinkage of at 3 percent in length, or at least 4 percent in length, or at least 5 percent in length as determined when the first back yarn 18 is at its maximum moisture regain and measured at 23°C and 65% relative humidity. In various embodiments, first back yarn 18 may comprise or consist of any suitable filaments or fibers, including natural fibers or man-made filaments or fibers or a combination of natural filaments and man-made filaments or fibers. The first back yarn 18 may comprise or consist of cellulosic fibers, including natural cellulosic fibers, or man-made cellulosic filaments or fibers, such as filaments or fibers comprising or consisting of a regenerated cellulose material. In another example embodiment, first back yarn 18 may include filaments or fibers of a material chosen from natural silk, wool, artificial silk, a naturally occurring cellulosic material (such as cotton, flax and hemp), a regenerated cellulosic material (such as regenerated cellulosic materials made using the cuprammonium process, the viscose process, the Lyocell process, and the like), as well as any blend thereof. In some embodiments, the filaments or fibers of the first back yarn 18 may comprise or consist of filaments or fibers comprising a synthetic polymer having a high moisture regain, such as a moisture regain of greater than 6 weight percent. The man-made filaments or fibers of the first back yarn 18 may be made from a synthetic polymeric filament or fiber material including one or more synthetic polymers alone or in combination with additional additives or treatments at the filament, fiber, or yarn level which increase the moisture regain of the synthetic polymer filament or fiber material, and result in the first back yarn 18 achieving a moisture regain of at least 6.0 weight percent.

Additionally, in one embodiment, the first back yarn 18 or the outer surface of back layer 12 may have a wicking finish or treatment to further increase the moisture absorption properties of the first back layer yarn 18 or the back layer 12. For example, a chemical finishing agent that binds to the outer surface of back layer 12 and/or to first back yarn 18 may be added to the first back yarn 18 before knitting or to the back layer 12 once back layer 12 has been knitted. In some embodiments, the wicking finish or treatment or a wicking additive may be applied to back layer 12 and/or to first back yarn 18. Alternatively, back layer 12, first back yarn 18, or both the back layer 12 and the first back yarn 18 are free of a wicking finish, treatment or additive.

In some embodiments, face layer 14 has durable water repellency (DWR) properties. In this embodiment, face layer 14 is formed by a first face yarn 20 having DWR properties that is plated with a face elastic yarn 24. In some cases, the DWR properties of first face yarn 20 may comprise DWR additives added to first face yarn 20 during yarn formation, such as being spun with DWR additives inside the yarn, or DWR additives may be added to first face yarn 20 after yarn formation, or a DWR finish may be applied to the face layer 14 after knitting. With this arrangement, face layer 14 forms a fabric outer surface which further avoids or reduces the occurrence of moisture spots, such as sweat marks on the outer surface of fabric 10 which may occur during sweaty activities.

In various embodiments, first face yarn 20 may comprise or consist of filaments or fibers comprising a synthetic polymer, such as for example but not limited to: filaments or fibers comprising a synthetic polymer selected from a polyamide, a polyester, a polyether, a polyurethane, a polyurea, a polyolefin, a polyacrylate, as well as any copolymer or blend or thereof. The synthetic polymer can comprise or consist of one or more polyamides, such as nylon 6, nylon 6,6, nylon 11, or a combination thereof. The synthetic polymer can comprise or consist of nylon 6,6. The first face yarn 20 may be a 15 to 100 denier (D) yarn, such as a yarn having 10 to 184 filaments (F). The synthetic polymer filament or fiber material may include internal DWR additives compounded with other components of the synthetic polymer filament or fiber material prior to the compounded synthetic polymer filament or fiber material being extruded or spun into filaments or staple fibers. In one embodiment, the first face yarn 20 is a 15 to 100 denier (D) yarn, such as a yarn having 10 to 184 filaments (F) of 6,6 nylon in which the filaments have been spun with one or more internal DWR additives. The back layer knit construction can comprise a full-feeder knit construction with the first back yarn and the back elastic yarn. A face layer knit construction can comprise a full-feeder knit construction with the first face yarn and the face elastic yarn. Both the back layer knit construction and the face layer knit construction can comprise full-feeder knit constructions. In some embodiments, the first face yarn 20 exhibits little or no shrinkage in length when moist or wet.

Additionally, in some embodiments, the outer surface of face layer 14 may be treated with a DWR finish to provide further durable water repellency properties to fabric 10. In one embodiment, the outer surface of face layer 14 may be finished with a DWR coating to further reduce the occurrence of moisture spots on the outer surface of fabric 10, such as moisture spots resulting from the presence of sweat absorbed by the knit fabric. For example, the DWR coating may be printed on the outer surface of face layer 14 once face fabric layer 14 is finished. In various embodiments, the DWR coating may be printed, such as for example screen printed, inkjet printed, or laminated, or spray coated. In some embodiments, the DWR coating may have a pre-determined pattern to provide moisture channeling out of face layer 14 for faster drying.

Connecting yarn 16 connects or binds together face layer 14 and back layer 12. Connecting yarn 16 includes a plurality of yarn connections between face layer 14 and back layer 12 to connect face layer 14 and back layer 12 to each other and form knit fabric 10. In some cases, connecting yarn 16 may be a single filament yarn, such as a single filament uncovered (i.e., bare) elastic yarn. Alternatively, the connecting yarn may be a covered elastic yarn in which filaments or fibers of a different material are wrapped around an outer perimeter of an elastic single or multi-filament core. One such example of a covered yarn is a single filament covered elastic yarn, where the covering is a covering yarn having a maximum moisture reuptake of less than 5.5 weight percent based on a weight of the covering yarn alone. Connecting yarn 16 is an elastic yarn comprising or consisting of an elastic material, such as elastane, an elastomeric polyether-polyurea copolymer. For example, in some embodiments, connecting yarn 16 may comprise or consist of a spandex (i.e., a type of elastane) yarn, such as a single filament uncovered spandex. In other embodiments, connecting yarn 16 may be made from a synthetic polymer elastomer such a polyamide elastomer, a polyester elastomer, a polyether elastomer, a polyurethane elastomer, a polyurea elastomer, a polyolefin elastomer, a polyacrylate elastomer, as well as any copolymer or blend thereof. The connecting yarn can be an elastic yarn having a denier in a range of 5D to 70D, such as a single filament uncovered elastic yarn having a denier in a range of 5D to 70D, or in a range of 10D to 50D, or in a range of 10D to 40D. When the connecting yarn is a covered elastic yarn, the elastic core of the yarn can be a single filament having a denier in a range of 5D to 70D, or a plurality of filaments having a combined denier in a range of 5D to 70D.

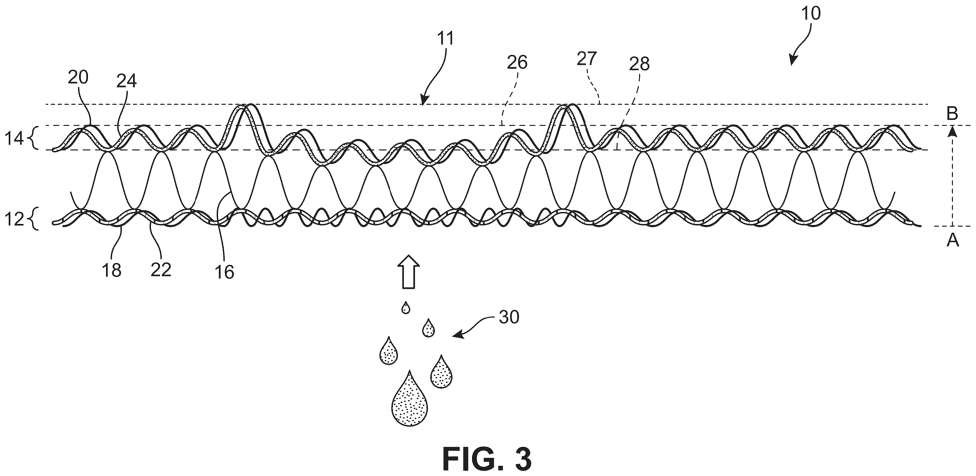

FIG. 3 illustrates a representational cross-sectional view of knit fabric 10 taken along the line shown in FIG. 1. In this embodiment, knit fabric 10 has a two layer knit construction joined by a connecting yarn, in which each layer has a separate knit construction such as a pique knit or a tricot knit or a ribbed knit or a single jersey knit or double jersey knit. The separate knit constructions of the two layers may be the same (e.g., both are pique knit constructions or both are single jersey knit constructions or both are double jersey knit constructions) or may be different (e.g., one layer can have a pique or ribbed knit construction and the other layer can have a single or double jersey knit construction, or one layer can have a single jersey knit construction and the other layer can have a double jersey knit construction). As shown in FIG. 3, knit face layer 14 and knit back layer 12 are joined by connecting yarn 16 that extends back and forth between the layers forming a plurality of yarn connections knit or inlaid between face layer 14 and back layer 12 during the knitting process. In an example embodiment, back layer 12 may be formed using two yarns plated together such that each loop in the knit structure of the back layer includes both yarns. A plated knit construction is understood in the art to mean a specific knit construction in which the two yarns have been plated together where a first yarn predominates on one side of the knit layer and a second yarn predominates on the opposite side of the knit layer.

Back layer 12 includes first back yarn 18 as described above and back elastic yarn 22 (i.e., a second back yarn) that is plated with first back yarn 18 and is in a plated knit construction with the back elastic yarn 22 such that back elastic yarn 22 is predominantly on the inside of back layer 12 (i.e., facing towards an inside surface of face layer 14) and first back yarn 18 is predominately on the outside of back layer 12 (i.e., facing towards a skin of a wearer). In an example embodiment, back elastic yarn 22 comprises an elastic material, such as elastane. For example, back elastic yarn 22 may be made of spandex (e.g., a type of elastane). The back elastic yarn 22 may be a single filament elastic yarn, or a multifilament elastic yarn. The back elastic yarn 22 may be a covered elastic yarn (i.e., a yarn with a single or multifilament elastic core and a covering of a different type of filament or fiber wrapped around the outer perimeter of the elastic core), or an uncovered (i.e., bare) elastic yarn, such as a single filament uncovered elastic yarn. One example of a covered elastic yarn is a single filament covered elastic yarn, where the covering is a covering yarn having a maximum moisture reuptake of less than 5.5 weight percent based on a weight of the covering yarn alone. The elastic core of the back elastic yarn 22 (e.g., a single filament core or a multifilament core) may have a denier in the range of 5D to 40D, or in the range of 10D to 30D. In one embodiment, back layer 12 may be a knit construction comprising or consisting of first back yarn 18 comprising or consisting of natural fibers, synthetic polymer filaments or fibers, or regenerated cellulosic filaments or fiber plated with back elastic yarn 22 comprising or consisting of an elastic material, such as elastane. The back layer 12 may comprise a full-feeder knit construction with the first back yarn 18 and the back elastic yarn 22.

Face layer 14 also includes face elastic yarn 24 (i.e., a second face layer yarn 24) that is knitted together or plated with first face yarn 20 such that the face elastic yarn 24 is predominately on the inside of face layer 14 (i.e., facing towards an inside surface of back layer 12) while first face yarn 20 is predominantly on the outside of face layer 14 (i.e., facing an exterior away from the skin of the wearer). Face elastic yarn 24 is made of an elastic material, such as elastane. For example, face elastic yarn 24 may comprise or consist of spandex (i.e., a type of elastane). The face elastic yarn 24 may be a single filament elastic yarn, such as a single filament spandex yarn. The face elastic yarn 24 may be an uncovered (bare) elastic yarn, such as a single filament uncovered elastic yarn. The face elastic yarn 24 may be a covered elastic yarn, such as a covered single filament elastic yarn or a covered multifilament elastic yarn. One example of a covered yarn is a single filament covered elastic yarn, where the covering is a covering yarn having a maximum moisture reuptake of less than 5.5 weight percent based on a weight of the covering yarn alone. The elastic core (i.e., a single filament elastic core or a multi-filament elastic core) of the face elastic yarn 24 may have a denier in a range of 10D to 70D, or of 10D to 50D, or of 20D to 40D. The face layer 14 may comprise a full-feeder knit construction with the first face yarn 20 and the face elastic yarn 24.

In other embodiments, face layer 14 may include two or more face yarns (e.g., two yarns similar to first face yarn 20) and back layer 12 may include two or more back yarns (e.g., two yarns similar to first back yarn 18). In some cases, the surface area, the surface texture, or both of the knit fabric may be mechanically treated to increase the surface area, the surface texture or both on an outer side of back layer 12 (i.e., the side of the knit fabric configured to face a wearer's skin during wear of a garment including the knit fabric). For example, the outer side (i.e., the side configured to face a wearer's skin) of back layer 12 may be mechanically treated, such as by being peached or brushed, to increase its surface area and increase an amount of moisture it can absorb as compared to the same knit fabric without the mechanical treatment.

In an example embodiment, connecting yarn 16 has a zig-zag structure that alternates between back layer 12 and face layer 14 forming a plurality of yarn connections to join face layer 14 and back layer 12 together. In various embodiments, connecting yarn 16 may be a single filament, such as a single filament uncovered yarn, or may include a multiple filament yarn. The plurality of yarn connections may comprise a plurality of connecting yarns. In cases where connecting yarn 16 comprises a plurality of yarns, each yarn of the plurality of yarns of connecting yarn 16 may have an independent zig-zag structure between back layer 12 and face layer 14. Additionally, in some embodiments, connecting yarn 16 may have DWR properties, such as a yarn with DWR ingredients included in the yarn during spinning or added to the yarn afterwards.

In an example embodiment, back layer 12 is configured to absorb moisture 30 from the skin of a wearer. For example, first back yarn 18 may be configured to absorb moisture 30 from sweat of a wearer. As shown in FIG. 3, moisture 30 from the wearer's skin may be absorbed by portions of first back yarn 18 in one or more areas of knit fabric 10. Absorbed moisture 30 may then be spread along the back layer 12, including along an inside surface of back layer 12 between back layer 12 and face layer 14. With this arrangement, moisture 30, such as from sweat of a wearer, is absorbed on the back layer 12 of knit fabric 10, essentially from a side A (facing the skin of the wearer) towards a side B (facing an exterior away from the skin of the wearer). The absorbed moisture 30 that is spread at least along the inside surface of back layer 12, and potentially between the inside surface of back layer 12 and the inside layer of face layer 14, evaporates out through face layer 14 over time without producing moist spots such as sweat marks that showing on the outside surface of face fabric layer 14 of knit fabric 10.

In some cases, moisture 30 absorbed by portions of first back yarn 18 of back layer 12 causes first back yarn 18 to shrink, which in turn causes back layer 12 to pucker or bag. Additionally, the added weight from moisture 30 absorbed by portions of first back yarn 18 may exert a downward force which causes connecting yarn 16 to pull downwards on opposing areas of face layer 14 and creates additional distortions or unevenness in an outer surface 26 of knit fabric 10, such as bagging or puckering 11, or intensifies the appearance of distortions or unevenness caused by the shrinkage of the first back yarn, making the bagging or puckering appear worse.

For example, as shown in FIG. 3, areas of fabric 10 where connecting yarn 16 extends between back layer 12 and face layer 14 are pulled together more closely on the inside surface of the back layer 12 and remain further apart on the inside surface of face layer 14. As a result, outer surface 26 of the face layer 14 is distorted and may be pulled downward to a lower surface 28 in the areas where moisture is absorbed by first back yarn 18 of back layer 12. Additionally, areas of face layer 14 at an interface between the moist region where moisture 30 is absorbed and the surrounding dry regions may pucker or rise up to an upper surface 27. As shown in FIG. 3, lower surface 28 is located below outer surface 26 and upper surface 27 is located above outer surface 26. Thus, in these cases, when moisture 30 is absorbed by portions of first back yarn 18, the added weight and/or increased rate of shrinkage may cause distortions or unevenness in outer surface 26 of knit fabric 10, such as areas of bagging or puckering 11, or may make the appearance of bagging or puckering due to shrinkage of the first back yarn 18 and the back layer 12 more pronounced at the interface between the wet region of the knit fabric 10 and a dry region of the knit fabric 10.

In accordance with the present disclosure, it has been found that distortions or unevenness in an outer surface of knit fabric (e.g., bagging or puckering of the knit fabric at an interface between a moist region and a dry region in the knit textile) may be addressed by intentionally varying a thickness of elastic yarns (e.g., yarns made of elastane) used in each of the face layer, the back layer, and the connecting yarn joining the face layer to the back layer. By using elastic yarns having different thicknesses (i.e., having different deniers), the effects of moisture absorption by the knit fabric (such as yarn shrinkage or added weight or both yarn shrinkage and added weight) may be compensated for so as to prevent or avoid any distortions or unevenness in the outer surface of the face layer of the knit fabric. Due to the fact that the yarn shrinkage and increased weight occurs in the fibers or filaments of the first back yarn on the back layer of the knit fabric due to the higher moisture regain of the first back yarn, it would have been expected that increasing the power of the back elastic yarn by increasing the denier of the back elastic yarn would prevent or reduce the effect of the yarn shrinkage or increased weight, thereby reducing or eliminating bagging or puckering of the knit fabric. Similarly, since the connecting yarn connects the back layer and the front layer, it would have been expected that increasing the power of the connecting elastic yarn by increasing the denier of the connecting elastic yarn would prevent or reduce the effect of the yarn shrinkage or increased weight, thereby reducing or eliminating bagging or puckering of the knit fabric. However, increasing the denier, such as by 5D or 10D or more, of only the back elastic yarn, of only the connecting yarn, or of both the back elastic yarn and the connecting yarn was not found to be effective in reducing or eliminating visible puckering or bagging on the outer side of the face layer. Unexpectedly, it was found that increasing the denier of the face elastic yarn, such as by 5D or 10D or more as compared to the denier of the back elastic yarn and the denier of the connecting yarn, was found to be effective in reducing or eliminating visible puckering or bagging on the outer side of the face layer.

Also in accordance with the present disclosure, it has been found that distortions or unevenness in an outer surface of knit fabric (e.g., bagging or puckering of the knit fabric at an interface between a moist region and a dry region in the knit textile) may be addressed by intentionally using full-feeder knit constructions for the elastic yarns (e.g., yarns made of elastane) in the back layer, in the face layer, or in both the face layer and the back layer. By using full-feeder knit constructions for the back layer, the face layer, or both the back layer and the face layer, the effects of moisture absorption by the knit fabric (such as yarn shrinkage or added weight or both yarn shrinkage and added weight) may be compensated for so as to prevent or avoid any distortions or unevenness in the outer surface of the face layer of the knit fabric. In some embodiments, it has been found that using a full-feeder knit construction in only the face layer, or in only the back layer, or in both the face and back layers, is effective to prevent or reduce the effect of the yarn shrinkage or increased weight, thereby reducing or eliminating bagging or puckering of the knit fabric.

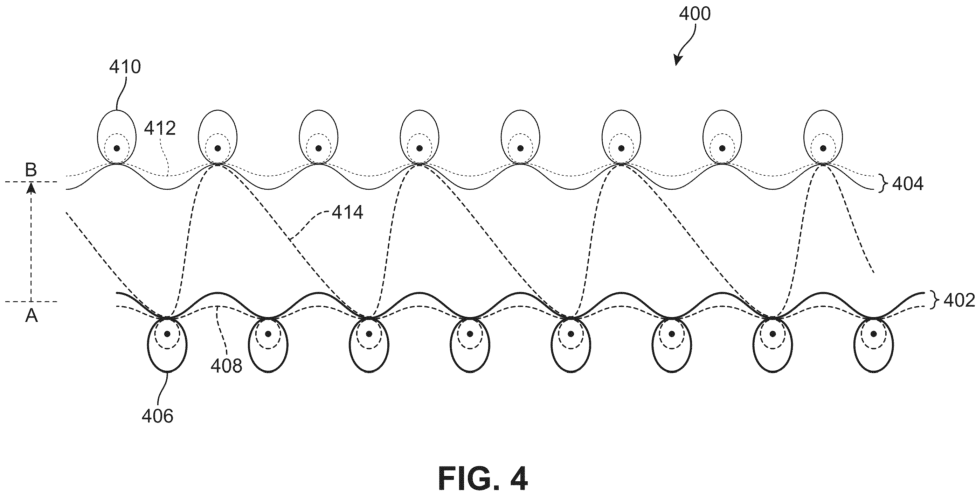

Referring now to FIG. 4, a knit construction diagram 400 for a knit fabric is shown. The knit fabrics constructed in accordance with the knit diagrams shown herein or as described herein have the ability to absorb moisture with fewer or less visible moisture spots visible on an outer surface of the fabric (e.g., facing away from the wearer) as compared to conventional knit fabrics. The knit fabrics constructed in accordance with the knit diagrams shown herein or as described herein also have the ability to absorb moisture without producing any distortions or unevenness at an interface between a moist region and a dry region of the knit fabric which results in visible bagging or puckering on the outer surface of the knit fabric, such as the bagging or puckering 11 shown in FIGs. 1 and 3.

As shown in FIG. 4, knit construction diagram 400 includes a back layer 402 configured to form the inner layer of a knit fabric which is the layer next to the skin of a wearer. FIG. 4 also includes a face layer 404 configured to form an outer layer of a knit fabric which corresponds to the layer of the knit fabric facing the exterior and away from the skin of the wearer. In an example embodiment, a connecting yarn 414 extends back and forth between back layer 402 and face layer 404 forming a plurality of yarn connections that bind together back layer 402 and face layer 404 thereby connecting the fabric together.

In some embodiments, back layer 402 comprises two yarns that are plated together, where at least one of the yarns has a higher moisture regain as compared to the first face yarn and the other yarn is an elastic yarn made of an elastic material, such as elastane. In an example embodiment, back layer 402 includes a first back yarn 406 having a moisture regain of at least 6.0 weight present, and a back elastic yarn 408 that is made of an elastic material, such as elastane. The first back yarn 406 is configured to absorb moisture from the skin of a wearer and may spread it across on an inside surface of back layer 402, and in some cases spreading it between back layer 402 and face layer 404. In some cases, the moisture regain of first back yarn 406 may be in a range of 6.0% to 20.0%. Moisture regain is the amount of moisture a material is able to absorb and retain from the surrounding environment and is expressed as a percentage of the material's dry weight. Moisture regain is calculated by dividing the weight of water in a saturated material by its dry weight (w%). All of the moisture regain values recited herein are understood to be determined at 23°C and 65% relative humidity.

In an example embodiment, first back yarn 406 has a minimum moisture regain of at least 6.0 weight percent based on a weight of first back yarn 406. In other embodiments, the minimum moisture regain and/or the maximum moisture regain of the first back yarn may vary. In some cases, the minimum moisture regain of the first back yarn is at least 7.5 weight percent, or at least 8.0 weight percent, or at least 8.5 weight percent, or at least 9.0 weight percent and the maximum moisture regain of the first back yarn is 20.0 weight percent or less, or is 19.0 weight percent or less, or is 18.0 weight percent or less. In still other embodiments, a minimum moisture regain of the first back yarn is at least 7.0 weight percent and a maximum moisture regain of the first back yarn is 20.0 weight percent or less, or a minimum moisture regain of the first back yarn is at least 7.5 weight percent and a maximum moisture regain of the first back yarn is 19.0 weight percent or less, or a minimum moisture regain of the first back yarn is at least 8.0 weight percent and a maximum moisture regain of the first back yarn is 18.0 weight percent or less.

In an example embodiment, first back yarn 406 comprises filaments or fibers of a cellulosic material, such as a regenerated cellulose, and back elastic yarn 408 comprises elastane. Back elastic yarn 408 is plated with first back yarn 406 in a non-plated knit construction or in a plated knit construction such that back elastic yarn 408 is predominantly on the inside of back layer 402 (i.e., facing towards an inside surface of face layer 404) and first back yarn 406 is predominantly on the outside of back layer 402 (i.e., facing towards a skin of a wearer).

In some embodiments, first back yarn 406 may include a plurality of filaments or staple fibers, including filaments or fibers comprising or consisting of a cellulosic material. In some cases, a majority of the plurality of filaments or staple fibers of first back yarn 406 comprise or consist of a cellulosic material. In other cases, at least 80 percent, at least 90 percent, or at least 95 percent of the plurality of filaments or staple fibers of first back yarn 406 comprise or consist of a cellulosic material. In an example embodiment, the cellulosic material may be a regenerated cellulose. In some cases, a polymeric component of the cellulosic material may consist of a regenerated cellulose.

In other embodiments, first back yarn 406 may comprise or consist of any suitable natural cellulosic fiber or a man-made cellulosic filament or fiber, such as a regenerated cellulose filament or fiber. In another example embodiment, first yarn 406 comprises or consists of fibers or filaments including a material chosen from natural silk, wool, artificial silk, naturally occurring cellulosic materials (such as cotton, flax and hemp), regenerated cellulosic material (such as regenerated cellulosic materials made using the cuprammonium process, the viscose process, the Lyocell process, and the like), as well as any blend thereof.

In some embodiments, face layer 404 comprises two yarns that are plated together, where one of the yarns has a lower moisture regain as compared to the first back yarn and the other yarn is an elastic yarn comprising an elastic material, such as elastane. In some cases, the moisture regain of first face yarn 410 may be in a range of 3.0% to 6.0%. In an example embodiment, a maximum moisture regain of first face yarn 410 is less than or equal to 5.5 weight percent based on a weight of first face yarn 410. In another embodiment, the moisture regain of first face yarn 410 is less than or equal to 5.0 weight percent, or less than or equal to 4.5 weight percent, or less than or equal to 4.0 weight percent, or less than or equal to 3.5 weight percent. In an example embodiment, face layer 404 includes a first face yarn 410 that has durable water repellency (DWR) properties effective to repel moisture and a face elastic yarn 412 that is made of an elastic material, such as elastane. In some cases, the DWR properties of first face yarn 410 may be due to the first face yarn 410 comprising DWR additives added during yarn formation, such as the first face yarn 410 being a yarn spun with DWR additives inside the yarn. Alternatively or additionally, DWR additives may be added to first face yarn 410 after yarn formation, or a DWR finish may be applied to first face of the knit fabric.

In other embodiments, the minimum moisture regain and/or the maximum moisture regain of the first face yarn may vary. In some cases, a maximum moisture regain of the first face yarn is 6.0 weight percent or less, or is 5.5 weight percent or less, or is 5.0 weight percent or less, or is 4.5 weight percent or less, or is 4.0 weight percent or less, or is 3.5 weight percent or less.

In an example embodiment, first face yarn 410 comprises a synthetic polymer filament or fiber material (i.e., the material used to extrude or spin the filaments or fibers), which in some aspects includes a polyamide, and face elastic yarn 412 comprises an elastic material, such as elastane. Face elastic yarn 412 is plated with first face yarn 410, and the face layer may have a plated knit construction such that face elastic yarn 412 is predominately on the inside of face layer 404 (i.e., facing towards an inside surface of back layer 402) while first face yarn 410 is predominately on the outside surface of face layer 404 (i.e., facing an exterior away from the skin of the wearer).

In other embodiments, first face yarn 410 may comprise any suitable synthetic polymer, such as for example but not limited to: filaments or fibers comprising a synthetic polymer selected from a polyamide, a polyester, a polyether, a polyurethane, a polyurea, a polyolefin, a polyacrylate, as well as any copolymer or blend or thereof. In still other embodiments, first face yarn 410 may be made from a natural or synthetic material that has been treated with DWR additives or ingredients to provide first face yarn 410 with a moisture regain of less than 5.5 weight percent.

In some embodiments, first face yarn 410 may include a plurality of filaments or staple fibers, including filaments or fibers comprising a synthetic polymer filament or fiber material. The synthetic polymer filament or fiber material can comprise a synthetic polymer selected from a polyamide, a polyester, a polyether, a polyurethane, a polyurea, a polyolefin, a polyacrylate, as well as any copolymer or blend or thereof. A polymeric component of the synthetic polymer filament or fiber material can comprise or consist of a polymer from a polyamide, a polyester, a polyether, a polyurethane, a polyurea, a polyolefin, a polyacrylate, as well as any copolymer or blend or thereof. In some cases, a majority of the plurality of filaments or staple fibers of first face yarn 410 comprise or consist of the synthetic polymer filament or fiber material. In other cases, at least 95 percent of the plurality of filaments or staple fibers of first face yarn 410 comprise or consist of the synthetic polymer filament or fiber material. In one embodiment, the synthetic polymer filament or fiber material includes a polyamide, a polyimide, a polyester, a polyether, a polyacrylate, a polyolefin, or any combination thereof.

In an example embodiment, connecting yarn 414 connects or binds together face layer 404 and back layer 402. In an example embodiment, connecting yarn 414 has a zig-zag structure that alternates between back layer 402 and face layer 404 forming a plurality of yarn connections that bind together back layer 402 and face layer 404. In some cases, connecting yarn 414 may be a single filament, such as a single filament uncovered yarn, or may include multiple filaments. The plurality of yarn connections may comprise a plurality of connecting yarns. In cases where connecting yarn 414 comprises a plurality of connecting yarns, each yarn of the plurality of connecting yarns 414 may have an independent zig-zag structure between back layer 402 and face layer 404.

Connecting yarn 414 comprises or consists of an elastic material, such as elastane. Connecting yarn 414 may be a single filament uncovered elastic yarn. In other embodiments, connecting yarn 414 may comprise one or more filaments of an elastic material in combination with one or more natural fibers or one or more man-made filaments or fibers. Additionally, in some embodiments, connecting yarn 414 may have DWR properties, and may be a yarn with DWR ingredients included in the yarn during spinning or added to the yarn afterwards.

In an example embodiment, a knit fabric based on knit construction diagram 400 has face layer 404 that includes a face elastic yarn having a higher denier than a back elastic yarn included in back layer 402 and also having a higher denier than a connecting yarn 414. Such a construction may compensate for the moisture absorbed by the first back yarn on back layer 402 having a relatively high moisture regain, and provide a knit fabric which is effective to reduce or eliminate puckering or bagging of the face layer due to shrinkage of the back yarn alone or in combination with increased weight of the back yarn due to moisture absorption. That is, in such a construction, a denier of face elastic yarn 412 is greater than a denier of back elastic yarn 408 and is also greater than a denier of connecting elastic yarn 414. In an example embodiment, the difference in denier between the elastic yarn included in face layer 404 (e.g., face elastic yarn 412) and the elastic yarn included in back layer 402 (e.g., back elastic yarn 408) and connecting elastic yarn 414 is at least 5D. In one embodiment, the difference in denier between the elastic yarn included in face layer 404 (e.g., face elastic yarn 412) and the elastic yarn included in back layer 402 (e.g., back elastic yarn 408) and connecting elastic yarn 414 is at least 10D.

In an example embodiment, back layer 402 is formed by first back yarn 406 comprising or consisting of filaments or fibers including a cellulosic material, such as regenerated cellulose. The first back yarn has a minimum moisture regain of at least 6.0 weight percent, and is plated with back elastic yarn 408 made of elastane. The back elastic yarn may have a denier of about 5D, or about 10D, or about 15D, or of about 20D. Denier is a unit of measurement that indicates the thickness of yarns or filaments used to make fabrics and textiles. A higher denier means the yarn or filament is thicker than a yarn having a lower denier, and may correlate with the yarn being stronger and more durable. For elastic yarns, a higher denier yarn or filament typically has greater elastic strength than a yarn or filament made of the same material but having a lower denier. Face layer 404 includes first face yarn 410, which comprises or consists of a synthetic polymer filament or fiber material, such as a synthetic polymer filament or fiber material comprising a polyamide. The first face yarn 410 has a maximum moisture regain of less than 5.5 weight percent and is plated with face elastic yarn 412 made of elastane having a denier of about 10D or about 15D or about 20D or about 25D or about 30D, where the denier of the face elastic yarn 412 is at least 5D greater than the denier of the back elastic yarn. In other words, if the back elastic yarn has a denier of 5D, the face elastic yarn has a denier of at least 10D; if the back elastic yarn has a denier of 10D, the face elastic yarn has a denier of at least 15D; if the back elastic yarn has a denier of 15D, the face elastic yarn has a denier of at least 20D, etc. In some aspects, the denier of the face elastic yarn is at least 10D greater than the denier of the back elastic yarn. In other words, in accordance with this aspect, if the back elastic yarn has a denier of 5D, the face elastic yarn has a denier of at least 15D; if the back elastic yarn has a denier of 10D, the face elastic yarn has a denier of at least 20D; if the back elastic yarn has a denier of 15D, the face elastic yarn has a denier of at least 25D, etc. Additionally, the denier of the face elastic yarn is at least 5D greater or at least 10D than the denier of the connecting elastic yarn 414. In one example, the denier of the connecting elastic yarn 414 is the same as the denier of the back elastic yarn 408, such as 5D or 10D or 15D or 20D as in the example illustrated in FIG.4.

In this example embodiment, the denier of the elastane forming face elastic yarn 412 of face layer 404 is 10D greater than the denier of the elastane forming back elastic yarn 408 of back layer 402. Additionally, the denier of the elastane forming face elastic yarn 412 of face layer 404 is 10D greater than the denier of the elastane forming connecting elastic yarn 414. The denier of the elastane forming back elastic yarn 408 and the denier of the elastane forming connecting elastic yarn 414 is the same, e.g., 20D in this example. With this arrangement, the greater or higher denier of face elastic yarn 412 of face layer 404 is effective to compensate for shrinkage of the back yarn when it absorbs moisture as well as the added weight of moisture absorbed by first back yarn 406 of back layer 402, resulting in the knit fabric based on knit construction diagram 400 being configured to resist deformation that causes distortions or unevenness in the outer surface of the knit fabric, such as bagging or puckering 11 shown in FIGs. 1 and 3.

In an example embodiment, the knit construction diagram 400 and techniques described herein provide a knit fabric that is effective to resist deformation of face layer 404 caused by moisture regain of first back yarn 406. In some cases, this knit fabric is effective to resist deformation of face layer 404 caused by moisture regain of at least 5 weight percent, or of at least 10 weight percent, or at least 15 weight percent of first back yarn 406 based on a weight of first back yarn 406.

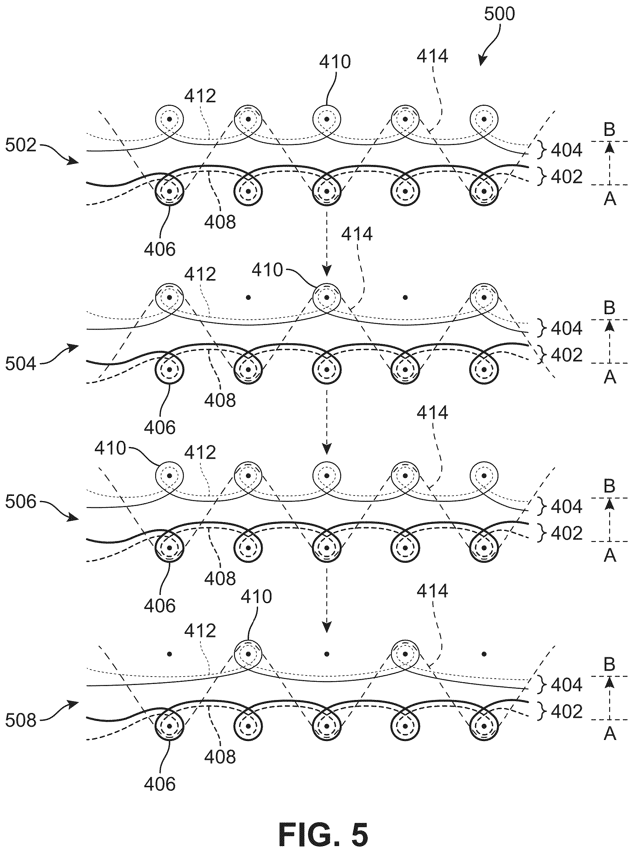

Referring now to FIG. 5, a schematic view of an example embodiment of a knitting process 500 for a knit fabric based on knit construction diagram 400 with a pique knit construction is shown. Pique knit fabrics are a type of double knit textile that have two layers knit at the same time to form a waffle-knit structure. Knitting process 500 for a pique knitted fabric results in the face layer being formed with twice as many yarns as the back layer, thus creating raised and recessed areas in the face layer of the knit fabric. A knitting process for a ribbed knitted fabric results in the face layer including a series of ribs, such as a 1x1 ribbed knit construction (with 1 raised rib alternating with 1 recessed rib) or a 2x2 ribbed knit construction (with 2 raised ribs alternating with 2 recessed ribs), and the like. In an example embodiment, the knit fabric, including a pique knit fabric, a tricot knit fabric, a ribbed knit fabric or a jersey knit fabric, may be weft knit using a circular knitting machine that has two needle beds. In other embodiments, the knit fabric may be weft knit using a flat-bed knitting machine that has two needle beds.

In some embodiments, a pique knitted fabric may be formed by at least four courses of yarns with intermeshed loops produced by knitting process 500. Similarly, a tricot, ribbed, or jersey knitted fabric may be formed by at least four courses of yarns with intermeshed loops produced by a knitting process. In the illustrated implementation of knitting process 500, the pique knit construction is a repeat of four courses. However there can be various iterations of this structure without departing from the scope of the disclosure. In an example embodiment, pique knitted textile in accordance with the present disclosure includes first back yarn 406 plated with back elastic yarn 408 forming back layer 402, first face yarn 410 plated with face elastic yarn 412 forming face layer 404, and connecting yarn 414 (e.g., connecting elastic yarn 414) extending between and connecting face layer 404 and back layer 402.

As shown in FIG. 5, knitting process 500 includes at least four courses that repeat to form a pique knitted fabric, including a first course 502, a second course 504, a third course 506, and a fourth course 508. Knitting process 500 may repeat courses 502, 504, 506, 508 any number of times to form a pique knitted fabric of a desired size and shape. As part of knitting process 500, tuck stitches are alternated on the needles during every other course to create the textured pattern of the pique knit construction.

For example, as shown in FIG. 5, during first course 502, first back yarn 406 plated with back elastic yarn 408 are knit on back layer 402, first face yarn 410 plated with face elastic yarn 412 are knit on face layer 404, and connecting yarn 414 (e.g., connecting elastic yarn 414) extends between alternating knit loops on each of back layer 402 and face layer 404. During second course 504, first back yarn 406 plated with back elastic yarn 408 are again knit on back layer 402, while first face yarn 410 plated with face elastic yarn 412 on face layer 404 have tuck stitches between every other needle. Connecting yarn 414extends between alternating knit loops on each of back layer 402 and face layer 404 opposite from first course 502.

Continuing with knitting process 500, during third course 502, first back yarn 406 plated with back elastic yarn 408 are knit on back layer 402, first face yarn 410 plated with face elastic yarn 412 are knit on face layer 404, and connecting yarn 414 again extends between alternating knit loops on each of back layer 402 and face layer 404. During fourth course 508, first back yarn 406 plated with back elastic yarn 408 are again knit on back layer 402, while first face yarn 410 plated with face elastic yarn 412 on face layer 404 have tuck stitches between every other needle, opposite from the needles from second course 504. Connecting yarn 414 extends between alternating knit loops on each of back layer 402 and face layer 404 opposite from third course 506. With this arrangement, a pique knit fabric is formed by knitting process 500.

In some embodiments, including knit fabrics comprising a pique, tricot, ribbed or jersey knit construction, a path of connecting yarn 414 forms a zig-zag pattern of the plurality of yarn connections between back layer 402 and face layer 404. In other embodiments, a path of connecting yarn 414 may alternate between directly adjacent loops of a knit structure of back layer 402 and face layer 404. In still other embodiments, a path of connecting yarn 414 may alternate between directly adjacent loops of a knit structure of back layer 402 and face layer 404 in a zig-zag pattern.

In one embodiment of a knit structure of a knit fabric, only connecting yarn 414 forms the plurality of yarn connections between face layer 404 and back layer 402, such that all yarns of back layer 402 do not extend beyond back layer 402 and into face layer 404, and all yarns of face layer 404 do not extend beyond face layer 404 and into the back layer 402.

In an example embodiment, a knit construction of at least back layer 402 comprises a full-feeder knit construction with first back yarn 406 and back elastic yarn 408. In an example embodiment, a knit construction of at least face layer 404 comprises a full-feeder knit construction with first face yarn 410 and face elastic yarn 412. In an example embodiment, a knit construction of both back layer 402 and face layer 404 comprise full-feeder knit constructions such that each loop in the knit structure of back layer 402 includes first back yarn 406 plated with back elastic yarn 408 and each loop in the knit structure of face layer 404 includes first face yarn 410 plated with face elastic yarn 412. As used in the art of machine knitting, a full-feeder knit construction is understood to be a knit construction in which, during the knitting process, an elastic yarn is provided to every feeder feeding yarn to the needles constructing the knit. This is in contrast to a half-feeder knit construction, in which an elastic yarn is provided to only alternative feeders (e.g., every other feeder) feeding yarn to the needles constructing the knit. In other words, during the knitting process (e.g., knitting process 500) for a full-feeder knit construction, every feeder supplying the needles forming back layer 402 includes back elastic yarn 408, instead of having only some of the feeders supply back elastic yarn 408 to some of the needles. Similarly, every feeder supplying the needles forming face layer 404 includes face elastic yarn 412, instead of having only some of the feeders supply face elastic yarn 412 to some of the needles. Having only some of the feeders supply some of the needles with elastic yarn results in only some (not all) of the loops in the knit structure including the elastic yarn, such as in a half-feeder knit construction. As discussed above, in some embodiments, the knit construction of the back layer or the front layer or both the front layer and the back layer comprises a full-feeder knit construction. Alternatively, in other embodiments, the knit construction of the back layer or the front layer or both the front layer and the back layer comprises a half-feeder knit construction.

In some embodiments, a gauge of the knit fabric ranges from about 2.5 to about 40. In other embodiments, a gauge of the knit fabric ranges from about 18 to about 36. In still other embodiments, a gauge of the knit fabric ranges from about 2.5 to about 18. In some embodiments, a basis weight of the knit fabric ranges from about 50 grams per square meter (gsm) to about 300 gsm. In other embodiments, a basis weight of the knit fabric ranges from about 100 to about 250 gsm, or from about 150 to about 210 gsm.

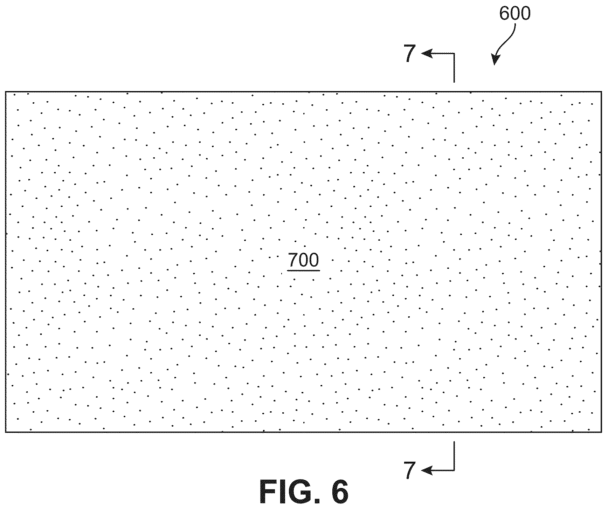

Referring now to FIG. 6, a representative view of a knit fabric 600 in accordance with the present disclosure demonstrating resistance to distortions or unevenness in an outer surface 700 of knit fabric 600 caused by the knit fabric absorbing moisture is shown. In an example embodiment, knit fabric 600 may be formed according to knitting process 500. As described above, knit fabric 600 is a knit fabric having a face layer including a first face yarn having a maximum moisture regain of less than 5.5 weight percent plated with a face elastic yarn. The knit fabric 600 also includes a back layer opposite the face layer. The back layer includes a first back yarn having a minimum moisture regain of at least 6.0 weight percent plated with a back elastic yarn. The face layer and back layer are joined by an elastic connecting yarn. In an example embodiment, the difference in denier of the elastic yarns used to form knit fabric 600 resists or prevents distortions or unevenness in an outer surface 700 of knit fabric 600 caused by the knit fabric absorbing moisture, such as resisting visible bagging and puckering occurring at an interface between a region of absorbed moisture and a dry region.

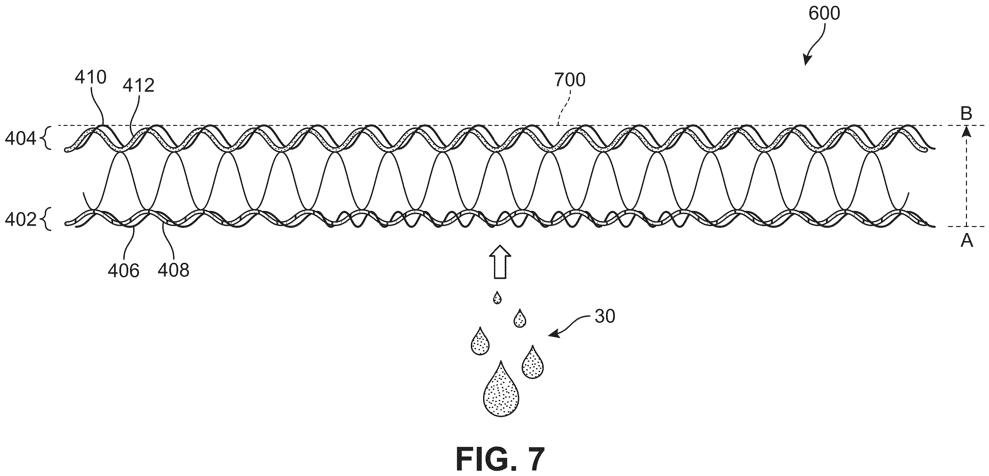

Referring now to FIG. 7, a representational side cross-sectional view of knit fabric 600 taken along the line in FIG. 6 is shown. In this embodiment, knit fabric 600 includes back layer 402 that includes first back yarn 406 having a relatively high level of moisture regain, due to the first back yarn comprising filaments or fibers of a cellulosic material, such as regenerated cellulose filaments or fibers. First back yarn 406 has a minimum moisture regain of at least 6.0 weight percent and is plated with back elastic yarn 408 having a denier of about 20D, such as an uncovered single filament elastane yarn. Knit fabric 600 also includes face layer 404 that includes first face yarn 410 comprising or consisting of a synthetic polymer filament or fiber material, such as a synthetic polymer filament or fiber material comprising a polyamide. First face yarn 410 has a maximum moisture regain of less than 5.5 weight percent and is plated with face elastic yarn 412. Face elastic yarn 412 has a denier of about 30D, such as an uncovered single filament of elastane yarn having a denier of 30D. Additionally, connecting yarn 414 has the same denier as back elastic yarn 408, i.e., about 20D in this example, such as an uncovered single filament 20D elastane yarn.

In this embodiment, the denier of the face elastic yarn 412 of face layer 404 is at least 10D greater than the denier of the back elastic yarn 408 of back layer 402. Additionally, the denier of the face elastic yarn 412 of face layer 404 is also at least 10D greater than the denier of connecting yarn 414. The denier of back elastic yarn 408 and the denier of connecting yarn 414 are approximately the same, e.g., about 20D in this example.

Accordingly, when moisture 30 is absorbed by first back yarn 406 of back layer 402, the greater or higher denier of face elastic yarn 412 of face layer 404 compensates for the shrinkage of first back yarn 406 when moist and the added weight of moisture 30 absorbed by first back yarn 406 of back layer 402 to resist deformation that causes distortions or unevenness in outer surface 700 of knit fabric 600, allowing knit fabric 600 to resist distortions or unevenness which manifest as bagging or puckering visible on the outer surface of the knit fabric, such as the bagging or puckering 11 present in fabric 10, as shown in FIGs. 1 and 3.

For example, as shown in FIG. 7, moisture 30 from the wearer's skin is absorbed by first back yarn 406. Moisture 30 is then spread along back layer 402, such as along an inside surface of back layer 402 between back layer 402 and face layer 404. With this arrangement, moisture 30, such as from sweat of a wearer, is absorbed on the back layer 402 of knit fabric 600 and evaporates out through the face layer 404 over the time. In some examples, this occurs without making visible sweat marks showing on outer surface 700 of face layer 404 of knit fabric 600.

In this embodiment, even though moisture has been absorbed by portions of first back yarn 406 of back layer 402 which has caused first back yarn 406 to shrink, and the moisture 30 absorbed by first back yarn 406 of back layer 402 has increased the weight of back layer 402 in the region of knit fabric 600 where moisture 30 has been absorbed, which exerts a downward force which causes connecting yarn 414 to pull downwards on face layer 404, due to the denier of face elastic yarn 412 of the face layer 404 being at least 5D greater than the denier of back elastic yarn 408 and at least 5D greater than the denier of connecting elastic yarn 414, face layer 404 is able to resist deforming or stretching unevenly, which in turn reduces or eliminates visible bagging or puckering on outer surface 700 of face layer 404 of knit fabric 600. In contrast with knit fabric 10 shown in FIGs. 1 and 3 and described above, in knit fabric 600 shown in FIGs. 6 and 7, due to the greater denier of face elastic yarn 412 of face layer 404, face layer 404 is able to resist the forces applied by the shrinking of the moist first back yarn 406 and the weight of absorbed moisture 30. That is, in knit fabric 600 shown in FIGs. 6 and 7, face elastic yarn 412 having a denier of 30D is thicker and has greater elastic strength than both back elastic yarn 408 having a denier of 20D and connecting elastic yarn 414 also having a denier of 20D. With this arrangement, the added moisture does not cause distortions or unevenness which is visible on outer surface 700, leaving outer surface 700 of knit fabric 600 without the visible bagging or puckering 11 of outer surface 26 of fabric 10 shown in FIG. 3.

In some embodiments, knit fabric 600 is effective to resist deformation of face layer 404 caused by moisture absorption of first back yarn 406. In one embodiment, knit fabric 600 is effective to resist deformation of face layer 404 caused by moisture absorption of at least 5 weight percent, or of at least 10 weight percent, or at least 15 weight percent by first back yarn 406 based on a weight of first back yarn 406.

In some embodiments, knit fabric 600 may be a piqué knit construction fabric or a double jersey knit construction fabric with back layer 402 including a first back yarn 406 comprising or consisting of fibers or filaments of a cellulosic material, such as a regenerated celluose, having a minimum moisture regain of at least 6.0 weight percent. First back yarn 406 is plated with back elastic yarn 408. Back elastic yarn 408 can have a denier in a range of about 15D to about 20D. Face layer 404 includes first face yarn 410 comprising or consisting of filaments or fibers of a synthetic polymer filament or fiber material. The synthetic polymer filament or fiber material comprises a synthetic polymer such as a polyamide. The polymeric component of the synthetic polymer filament or fiber material may comprise or consist of polyamides. The first face yarn 410 has a maximum moisture regain of less than 5.5 weight percent. The first face yarn 410 is plated with face elastic yarn 412. The face elastic yarn 412 may have a denier in the range of about 20D to about 30D. The face elastic yarn 412 may comprise or consist of an elastane yarn, such as an uncovered single filament elastane yarn. Additionally, connecting elastic yarn 414 may comprise or consist of an elastic yarn having the same denier as back elastic yarn 408, i.e., in a range of about 15D to about 20D. In other embodiments, the denier of connecting elastic yarn 414 may be different than back elastic yarn 408. In yet other embodiments, the back layer may comprise a full-feeder knit construction, or the front layer may comprise a full-feeder knit construction, or both the back layer and the front layer may comprise a full-feeder knit construction. Alternatively, in other embodiments, the back layer may comprise a half-feeder knit construction, or the front layer may comprise a half-feeder knit construction, or both the back layer and the front layer may comprise a half-feeder knit construction

In one embodiment, the difference in denier between face elastic yarn 412 and each of back elastic yarn 408 and connecting yarn 414 may be at least 10D. For example, as described above in reference to the example embodiment shown in FIGs. 6 and 7, face elastic yarn 412 has a denier of about 30D, while back elastic yarn 408 has a denier of about 20D and connecting elastic yarn 414 also has a denier of about 20D. In another embodiment, a lighter weight version of a knit fabric 600 may also be provided according to the techniques described herein. In the lighter weight knit fabric, the difference in denier between face elastic yarn 412 and each of back elastic yarn 408 and connecting yarn 414 may be at least 5D. For example, in such embodiments, face elastic yarn 412 may have a denier of about 20D, while back elastic yarn 408 has a denier of about 15D and connecting elastic yarn 414 also has a denier of about 15D.

While some of the present embodiments are directed to a pique or ribbed knit construction fabric, the same principles may be applied to fabrics of other knit constructions, such as a single jersey knit construction, a double jersey knit construction, a tricot knit construction, as well as other warp or weft knit construction fabrics, without departing from the scope of the disclosure. As described herein, knit fabric 600 can be used in any type of articles of apparel including shirts, headwear, coats, jackets, pants, underwear, gloves, socks, and footwear, as well as other articles, such as an accessory or an article of sporting equipment.

The following aspects of the disclosure may be embodied in the numbered clauses described below. The aspects are intended to be exemplary, rather than limiting and it will be apparent to those of ordinary skill in the art that many more aspects and implementations are possible that are within the scope of the disclosure.
1. A knit fabric comprising:
   a back layer comprising or consisting of
      a first back yarn having a minimum moisture regain of at least 6.0 weight percent based on a weight of the first back yarn, and
      a back elastic yarn,
      wherein the first back yarn and the back elastic yarn are plated together in a back layer knit construction;
   a face layer opposing the back layer, the face layer comprising or consisting of
      a first face yarn having a maximum moisture regain of less than 5.5 weight percent based on a weight of the first face yarn, and
      a face elastic yarn,
      wherein the first face yarn and the face elastic yarn are plated together in a face layer knit construction; and
   a connecting elastic yarn forming a plurality of yarn connections between the face layer and the back layer;
   wherein a denier of the face elastic yarn is greater than a denier of the back elastic yarn and is greater than a denier of the connecting elastic yarn; or
   wherein a back layer knit construction comprises a full-feeder knit construction with the first back yarn and the back elastic yarn, or a face layer knit construction comprises a full-feeder knit construction with the first face yarn and the face elastic yarn, or both the back layer knit construction and the face layer knit construction comprise full-feeder knit constructions; or
   wherein a denier of the face elastic yarn is greater than a denier of the back elastic yarn and is greater than a denier of the connecting elastic yarn, and a back layer knit construction comprises a full-feeder knit construction with the first back yarn and the back elastic yarn, or a face layer knit construction comprises a full-feeder knit construction with the first face yarn and the face elastic yarn, or both the back layer knit construction and the face layer knit construction both comprise full-feeder knit constructions.
2. The knit fabric of clause 1, wherein the denier of the face elastic yarn is at least 5 denier greater than the denier of the back elastic yarn and is at least 5 denier greater than the denier of the connecting elastic yarn, optionally wherein the denier of the face elastic yarn is at least 10 denier greater than the denier of the back elastic yarn and is at least 10 denier greater than the denier of the connecting elastic yarn.
3. The knit fabric of clause 1 or 2, wherein the minimum moisture regain of the first back yarn is at least 7.5 weight percent, or at least 8.0 weight percent, or at least 8.5 weight percent, or at least 9.0 weight percent.
4. The knit fabric of any of clauses 1-3, wherein a maximum moisture regain of the first back yarn is 20.0 weight percent or less, or is 19.0 weight percent or less, or is 18.0 weight percent or less.
5. The knit fabric of any of clauses 1-4, wherein the minimum moisture regain of the first back yarn is at least 7.0 weight percent and a maximum moisture regain of the first back yarn is 20.0 weight percent or less, or wherein the minimum moisture regain of the first back yarn is at least 7.5 weight percent and a maximum moisture regain of the first back yarn is 19.0 weight percent or less, or the minimum moisture regain of the first back yarn is at least 8.0 weight percent and a maximum moisture regain of the first back yarn is 18.0 weight percent or less.
6. The knit fabric of any of clauses 1-5, wherein a maximum moisture regain of the first face yarn is 6.0 weight percent or less, or is 5.5 weight percent or less, or is 5.0 weight percent or less, or is 4.5 weight percent or less, or is 4.0 weight percent or less, or is 3.5 weight percent or less.
7. The knit fabric of any of clauses 1-6, wherein the knit fabric is effective to resist deformation of the face layer caused by moisture regain by the first back yarn, optionally wherein the knit fabric is effective to resist deformation of the face layer caused by moisture regain of at least 5 weight percent, or of at least 10 weight percent, or at least 15 weight percent by the first back yarn based on a weight of the first back yarn.
8. The knit fabric of any of clauses 1-7, wherein each yarn connection of the plurality of yarn connections between the face layer and the back layer comprises or consists of the connecting elastic yarn; optionally wherein each yarn connection consists of a single filament uncovered elastic yarn.
9. The knit fabric of any of clauses 1-7, wherein the connecting elastic yarn comprises or consists of a single filament uncovered elastic yarn.
10. The knit fabric of any of clauses 1-9, wherein the back elastic yarn comprises or consists of a single filament uncovered elastic yarn; or wherein the face elastic yarn comprises or consists of a single filament uncovered elastic yarn; or wherein the connecting elastic yarn comprises or consists of a single filament uncovered elastic yarn; or wherein the back elastic yarn comprises or consists of a single filament uncovered elastic yarn and the face elastic yarn comprises or consists of a single filament uncovered elastic yarn; or wherein the back elastic yarn comprises or consists of a single filament uncovered elastic yarn, the face elastic yarn comprises or consists of a single filament uncovered elastic yarn, and the connecting elastic yarn comprises or consists of a single filament uncovered elastic yarn.
11. The knit fabric of any of clauses 1-10, wherein the denier of the back elastic yarn ranges from about 5 denier to about 35 denier, optionally ranges from about 10 denier to about 30 denier or from about 15 denier to about 25 denier, or optionally is about 5 denier, about 10 denier, about 15 denier, about 20 denier, about 25 denier, about 30 denier, or about 35 denier.
12. The knit fabric of any of clauses 1-11, wherein the denier of the connecting elastic yarn ranges from about 5 denier to about 35 denier, optionally ranges from about 10 denier to about 30 denier or from about 15 denier to about 25 denier, or optionally is about 5 denier, about 10 denier, about 15 denier, about 20 denier, about 25 denier, about 30 denier, or about 35 denier.
13. The knit fabric of any of clauses 1-12, wherein the denier of the face elastic yarn ranges from about 10 denier to about 40 denier, optionally ranges from about 15 denier to about 35 denier or from about 20 denier to about 30 denier, or optionally is about 10 denier, about 15 denier, about 20 denier, about 25 denier, about 30 denier, about 35 denier, or about 40 denier.
14. The knit fabric of any one of clauses 1-13, wherein a percent elongation of the face elastic yarn is less than a percent elongation of the back elastic yarn, or wherein a percent elongation of the face elastic yarn is less than a percent elongation of the connecting elastic yarn, or wherein a percent elongation of the face elastic yarn is less than a percent elongation of the back elastic yarn and of the connecting elastic yarn; optionally wherein the percent elongation of the face elastic yarn is at least 0.5 percent less, or is at least 1.0 percent less than the percent elongation of the back elastic yarn or of the connecting elastic yarn.
15. The knit fabric of any of clauses 1-14, wherein the back layer knit construction comprises a full-feeder knit construction with the first back yarn and the back elastic yarn, or wherein the face layer knit construction comprises a full-feeder knit construction with the first face yarn and the face elastic yarn, or wherein both the back layer knit construction and the face layer knit construction both comprise full-feeder knit constructions.
16. The knit fabric of any of clauses 1-15, wherein the back layer knit construction comprises a pique or ribbed knit construction and the face layer knit construction comprises a jersey knit construction, or wherein the face layer knit construction comprises a pique or ribbed knit construction and the back layer knit construction comprises a jersey knit construction.
17. The knit fabric of any of clauses 1-15, wherein the back layer knit construction is a jersey knit construction, the face layer knit construction is a jersey knit construction, and a combined knit construction of the back layer and the face layer is a double jersey knit construction.
18. The knit fabric of any of clauses 1-17, wherein the fabric is a tricot fabric or a double jersey fabric, optionally wherein the fabric is a warp knit tricot fabric or a warp knit double jersey fabric.
19. The knit fabric of any of clauses 1-18, wherein a path of the connecting elastic yarn forms a zig-zag pattern of the plurality of yarn connections between the face layer and the back layer, or wherein a path of the connecting elastic yarn alternates between directly adjacent loops of a knit structure of the face knit layer and the back knit layer, or wherein a path of the connecting elastic yarn alternates between directly adjacent loops of a knit structure of the face knit layer and the back knit layer in a zig-zag pattern.
20. The knit fabric of any of clauses 1-19, wherein, in a knit structure of the knit fabric, only the connecting elastic yarn forms the plurality of yarn connections between the face layer with the back layer, such that all yarns of the back layer do not extend beyond the back layer and into the face layer, and all yarns of the face layer do not extend beyond the face layer and into the back layer.
21. The knit fabric of any of clauses 1-20, wherein a gauge of the knit fabric ranges from about 2.5 to about 32, or from about 18 to about 32, or from about 2.5 to about 14.
22. The knit fabric of any of clauses 1-21, wherein a basis weight of the knit fabric ranges from about 50 grams per square meter (gsm) to about 300 gsm, or from about 100 to about 200 gsm.
23. The knit fabric of any of clauses 1-22, wherein an externally-facing side of the face layer has a brushed or peached texture, or where an externally-facing side of the back layer has a brushed or peached texture, or wherein externally-facing sides of both the face layer and the back layer have brushed or peached textures.
24. The knit fabric of any of clauses 1-23, wherein the knit fabric is a circular knit fabric, or is a warp knit fabric, or is a flat knit fabric, optionally wherein the knit fabric is a knit fabric made using a double needle bed.
25. The knit fabric of any of clauses 1-24, wherein the first back yarn includes a plurality of filaments or staple fibers, optionally wherein the plurality of filaments or staple fibers of the first back yarn comprise a cellulosic material, optionally wherein a majority of the plurality of filaments or staple fibers of the first back yarn comprise the cellulosic material, optionally wherein at least 80 percent, at least 90 percent, or at least 95 percent of the plurality of filaments or staple fibers of the first back yarn comprise the cellulosic material.
26. The knit fabric of clause 25, wherein the cellulosic material comprises a regenerated cellulose, optionally wherein a polymeric component of the cellulosic material consists of regenerated cellulose.
27. The knit fabric of any of clauses 1-26, wherein the first face yarn includes a plurality of filaments or staple fibers, optionally wherein the plurality of filaments or staple fibers of the first face yarn comprise a synthetic polymer filament or fiber material, optionally wherein a majority of the plurality of filaments or staple fibers of the first face yarn comprise the synthetic polymer filament or fiber material, optionally wherein at least 95 percent of the plurality of filaments or staple fibers of the first face yarn comprise the synthetic polymer filament or fiber material.
28. The knit fabric of clause 27, wherein the synthetic polymer filament or fiber material comprises a polyamide, a polyimide, a polyester, a polyether, a polyacrylate, a polyolefin, or any combination thereof.
29. The knit fabric of clause 27 or 28, wherein the synthetic polymer filament or fiber material further comprises a durable water repellent (DWR) additive, optionally wherein the DWR additive is an internal DWR additive compounded with other components of the synthetic polymer filament or fiber material prior to the compounded synthetic polymer filament or fiber material being extruded and spun into filaments or staple fibers.
30. The knit fabric of any of clauses 1-29, wherein the first face yarn comprises a DWR treatment or additive, optionally wherein a plurality of filaments or staple fibers of the first face yarn comprise a DWR treatment or additive; optionally wherein the DWR treatment or additive is an externally-applied DWR treatment or additive applied to external surfaces of the first face yarn.
31. The knit fabric of any of clauses 1-28, wherein a plurality of filaments or staple fibers of the first face yarn are free of an external DWR treatment applied only to external surfaces of the plurality of filaments or fibers, or wherein a plurality of filaments or staple fibers of the first face yarn are free of an internal DWR additive compounded with other components of a first face yarn material prior to the compounded first face yarn material being extruded and spun into the plurality of filaments or staple fibers, or wherein a plurality of filaments or staple fibers of the first face yarn are free of an external DWR treatment and free of an internal DWR additive.
32. The knit fabric of any of clauses 1-31, wherein the first back yarn comprises a wicking treatment or additive; optionally wherein a plurality of filaments or fibers of the first back yarn comprise a wicking treatment or additive, optionally wherein the wicking treatment is an externally applied wicking treatment applied directly to external surfaces of the first back yarn or is an externally applied wicking treatment applied directly to external surfaces of a plurality of filaments or fibers of the first back yarn, or wherein the wicking treatment or additive is an internal wicking additive compounded with a yarn material prior to extrusion or spinning filaments or fibers of the first back yarn.
33. The knit fabric of any of clauses 1-31, wherein the first back yarn or a plurality of filaments or fibers of the first back yarn are free of an external wicking treatment, or wherein the first back yarn or a plurality of filaments or staple fibers of the first back yarn are free of an internal wicking additive, or wherein the first back yarn or the plurality of filaments or fibers of the first back yarn are free of wicking treatments or additives.
34. The knit fabric of any of clauses 1-33, wherein a polymeric component of the synthetic polymer filament or fiber material consists of at least one polyamide.
35. The knit fabric of any of clauses 1-34, wherein the polyamide comprises or consists of nylon 6, nylon 6,6, nylon 11, or any combination thereof; optionally wherein the polyamide comprises or consists of nylon 6,6.
36. The knit fabric of any of clauses 1-35, wherein a denier of the first back yarn ranges from about 20 to about 150 denier, or from about 20 to about 100 denier, or from about 60 to about 120 denier, or from about 20 to about 50 denier.
37. The knit fabric of any of clauses 1-36, wherein the first back yarn is a spun staple fiber yarn, and a yarn count of the first back ranges from about 20 to about 180, or from about 40 to about 160, or from about 60 to about 140, or from about 60 to about 120, or is about 100, or is about or is about 110 or is about 120, or is about 130 or is about 140 based on the English Cotton Count system.
38. The knit fabric of any of clauses 1-37, wherein the first back yarn is a multifilament or staple fiber yarn, and a denier per filament or fiber of the first back yarn ranges from about 0.5 to about 2 denier per filament or fiber, or from about 0.7 to about 1.5 denier per filament or fiber, or from about 0.8 to about 1.2 denier per filament or fiber, or from about 0.9 to about 1.1 denier per filament or fiber.
39. The knit fabric of any of clauses 1-38, wherein a denier of the first face yarn ranges from about 20 to about 150 denier, or from about 40 to about 75 denier, or from about 20 to about 50 denier.
40. The knit fabric of any of clauses 1-39, wherein the first face yarn includes from about 10 to about 186 filaments.
41. The knit fabric of any of clauses 1-40, wherein the first face yarn is a multifilament or staple fiber yarn, and a denier per filament or fiber of the first face yarn ranges from about 0.5 to about 2 denier per filament or fiber, or from about 0.7 to about 1.5 denier per filament or fiber, or from about 0.8 to about 1.2 denier per filament or fiber, or from about 0.9 to about 1.1 denier per filament or fiber.
42. The knit fabric of any of clauses 1-41, wherein the first face yarn is a spun staple fiber yarn, and a yarn count of the first face ranges from about 20 to about 180, or from about 40 to about 160, or from about 60 to about 140, or is about 100, or is about or is about 110 or is about 120, or is about 130 or is about 140 based on the English Cotton Count system.
43. A method of knitting a fabric, the method comprising:
   knitting a back layer comprising
      a first back yarn having a minimum moisture regain of at least 6.0 weight percent based on a weight of the first back yarn, and
      a back elastic yarn,
   wherein the knitting the back layer comprises plating the first back yarn and the back elastic yarn in a back layer knit construction;
   knitting a face layer opposing the back layer, the face layer comprising
      a first face yarn having a maximum moisture regain of less than 5.5 weight percent based on a weight of the first face yarn, and
      a face elastic yarn,
   wherein the knitting the face layer comprises plating the first face yarn and the face elastic yarn in a face layer knit construction; and
   knitting a plurality of yarn connections between the face layer and the back layer using a connecting elastic yarn, thereby connecting the face layer and the back layer to each other and forming a knit fabric;
      wherein a denier of the face elastic yarn is greater than a denier of the back elastic yarn and is greater than a denier of the connecting elastic yarn.
44. The method of clause 43, wherein the knit fabric is a knit fabric according to any one of clauses 1 to 42.
45. The method of clause 43 or 44, wherein the knitting comprises knitting at least four courses of the knit fabric.
46. An article comprising the knit fabric of any one of clauses 1 to 42.
47. The article of clause 46, wherein the article is an article of apparel, an accessory, an article of footwear, or an article of sporting equipment.
48. The article of clause 47, wherein the article is an article of apparel.
49. A knit fabric comprising:
   a back layer comprising or consisting of
      a first back yarn having a minimum moisture regain of at least 10.0 weight percent based on a weight of the first back yarn, the first back yarn including a plurality of spun staple fibers, the plurality of spun staple fibers comprising a cellulosic material, and
      a back elastic yarn, wherein the back elastic yarn is a single filament uncovered elastic yarn,
      wherein the first back yarn and the back elastic yarn are plated together in jersey knit construction;
   a face layer opposing the back layer, the face layer comprising or consisting of
      a first face yarn having a maximum moisture regain of less than 4.0 weight percent based on a weight of the first face yarn, the first face yarn including a plurality of filaments extruded from a yarn material comprising a polymeric component and a DWR additive, the polymeric component comprising or consisting of nylon 6,6, and
      a face elastic yarn, wherein the face elastic yarn is a single filament uncovered elastic yarn,
      wherein the first face yarn and the face elastic yarn are plated together in a pique or jersey knit construction; and
      a connecting elastic yarn forming a plurality of yarn connections between the face layer and the back layer, wherein the connecting elastic yarn is a single filament uncovered elastic yarn;
      wherein a denier of the face elastic yarn is greater than a denier of the back elastic yarn and is greater than a denier of the connecting elastic yarn.

While various embodiments of the disclosure have been described, the description is intended to be exemplary, rather than limiting and it will be apparent to those of ordinary skill in the art that many more embodiments and implementations are possible that are within the scope of the disclosure. Accordingly, the disclosure is not to be restricted except in light of the attached claims and their equivalents. Also, various modifications and changes may be made within the scope of the attached claims.

## Claims

1. A knit fabric comprising:
a back layer comprising
a first back yarn having a minimum moisture regain of at least 6.0 weight percent based on a weight of the first back yarn, and
a back elastic yarn,
wherein the first back yarn and the back elastic yarn are plated together in a back layer knit construction;
a face layer opposing the back layer, the face layer comprising
a first face yarn having a maximum moisture regain of less than 5.5 weight percent based on a weight of the first face yarn, and
a face elastic yarn,
wherein the first face yarn and the face elastic yarn are plated together in a face layer knit construction; and
a connecting elastic yarn forming a plurality of yarn connections between the face layer and the back layer;
wherein a denier of the face elastic yarn is greater than a denier of the back elastic yarn and is greater than a denier of the connecting elastic yarn.

2. The knit fabric according to claim 1, wherein the denier of the face elastic yarn is at least 5 denier greater than the denier of the back elastic yarn and is at least 5 denier greater than the denier of the connecting elastic yarn, or wherein the minimum moisture regain of the first back yarn is at least 7.5 weight percent.

3. The knit fabric according to claim 1 or claim 2, wherein each yarn connection of the plurality of yarn connections between the face layer and the back layer consists of the connecting elastic yarn, and the connecting elastic yarn is a single filament uncovered elastic yarn.

4. The knit fabric according to any previous claim, wherein the denier of the face elastic yarn is 10 denier greater than the denier of the back elastic yarn and is 10 denier greater than the denier of the connecting elastic yarn.

5. The knit fabric according to any previous claim, wherein the back elastic yarn is a single filament uncovered elastic yarn and the face elastic yarn is a single filament uncovered elastic yarn.

6. The knit fabric according to any previous claim, wherein the face layer knit construction comprises a full-feeder knit construction, wherein the back layer knit construction comprises a pique or jersey knit construction.

7. The knit fabric according to any previous claim, wherein a path of the connecting elastic yarn forms a zig-zag pattern of the plurality of yarn connections between the face layer and the back layer, or wherein a path of the connecting elastic yarn alternates between directly adjacent loops of a knit structure of the face layer and the back layer, or wherein a path of the connecting elastic yarn alternates between directly adjacent loops of a knit structure of the face layer and the back layer in a zig-zag pattern.

8. The knit fabric according to any previous claim, wherein, in a knit structure of the knit fabric, only the connecting elastic yarn forms the plurality of yarn connections between the face layer with the back layer, such that all yarns of the back layer do not extend beyond the back layer and into the face layer, and all yarns of the face layer do not extend beyond the face layer and into the back layer.

9. The knit fabric according to any previous claim, wherein the first back yarn includes a plurality of filaments or staple fibers comprising a cellulosic material; optionally, wherein the cellulosic material comprises a regenerated cellulose.

10. The knit fabric according to any previous claim, wherein the first face yarn includes a plurality of filaments or staple fibers comprising a synthetic polymer filament or fiber material; optionally wherein the synthetic polymer filament or fiber material comprises a polyamide.

11. The knit fabric according to claim 10, wherein the synthetic polymer filament or fiber material further comprises an internal durable water repellent (DWR) additive compounded with other components of the synthetic polymer filament or fiber material prior to the compounded synthetic polymer filament or fiber material being extruded or spun into filaments or staple fibers.

12. The knit fabric according to any previous claim, wherein the first face yarn is free of an externally-applied DWR treatment applied to external surfaces of the first face yarn; or wherein the first back yarn is free of a wicking treatment or additive.

13. An article of apparel comprising the knit fabric according to any previous claim.

14. A method of knitting a fabric, the method comprising:
knitting a back layer comprising
a first back yarn having a minimum moisture regain of at least 6.0 weight percent based on a weight of the first back yarn, and
a back elastic yarn,
wherein the knitting the back layer comprises plating the first back yarn and the back elastic yarn in a back layer knit construction;
knitting a face layer opposing the back layer, the face layer comprising
a first face yarn having a maximum moisture regain of less than 5.5 weight percent based on a weight of the first face yarn, and
a face elastic yarn,
wherein the knitting the face layer comprises plating the first face yarn and the face elastic yarn in a face layer knit construction; and
knitting a plurality of yarn connections between the face layer and the back layer using a connecting elastic yarn, thereby connecting the face layer and the back layer to each other and forming a knit fabric;
wherein a denier of the face elastic yarn is greater than a denier of the back elastic yarn and is greater than a denier of the connecting elastic yarn.

15. The method according to claim 14, wherein the denier of the face elastic yarn is at least 5 denier greater than the denier of the back elastic yarn and is at least 5 denier greater than the denier of the connecting elastic yarn.
